(19) Europäisches Patentamt

European Patent Office

Office européen des brevets

(11) Publication number: **0 582 843 A1**

# EUROPEAN PATENT APPLICATION

(21) Application number: **93111144.7**

(22) Date of filing: **12.07.93**

(30) Priority: **22.07.92 JP 215804/92**

(43) Date of publication of application:
**16.02.94 Bulletin 94/07**

(84) Designated Contracting States:
**DE FR**

(51) Int. Cl.⁵: **G02B 27/64**

(71) Applicant: **NIKON CORPORATION**
**2-3, Marunouchi 3-chome**
**Chiyoda-ku**
**Tokyo(JP)**

(72) Inventor: **Imura, Yoshio**
**11-6-F-103, Shinsaku 5-chome,**
**Takatsu-ku**
**Kawasaki-shi, Kanagawa-ken(JP)**

(74) Representative: **Patentanwälte Grünecker,**
**Kinkeldey, Stockmair & Partner**
**Maximilianstrasse 58**
**D-80538 München (DE)**

(54) Vibration preventing apparatus for optical instrument.

㊸ A vibration preventing optical system for preventing an image blur is so supported as to be movable in directions orthogonal to the optical axis of a main optical system. Provided is a driving range regulating means for regulating a motion of this vibration preventing optical system. Provided also are driving means for controlling driving of the vibration preventing optical system on the basis of a vibration detected result by vibration detecting means. Further, there are provided driving quantity detecting means for detecting a driving quantity of the vibration preventing optical system that is given by the driving means. This vibration preventing optical system undergoes a centering process to such a position as to coincide with the optical axis of the main optical system after temporarily shifted to a regulation limit position with the aid of the driving range regulating means before effecting an exposure through the main optical system.

FIG. 1

## BACKGROUND OF THE INVENTION

### Field of the Invention

The present invention relates to a vibration preventing apparatus for an optical instrument that is suitable for use to prevent an image blur caused by a camera shake when employing a camera, etc..

### Related Background Art

In recent cameras, the respective units ranging from an auto-exposure mechanism, an auto-focus mechanism, etc. are remarkably electronized and highly automated. In this type of cameras, however, an insufficient aspect as an attempt for automation is a countermeasure against an image blur derived from a camera shake or the like caused when photographed with hands.

Under such circumstances, a variety of vibration preventing apparatuses for this type of cameras have hitherto been proposed for preventing the image blur induced especially when the camera is tilted. The vibration preventing apparatus is constructed to detect a vibration of the camera and to shift-drive a photographing lens system or an optical system constituting some portions thereof in accordance with a detected result thereof.

In the camera incorporating such a vibration preventing function, the photographing lens system or the optical system constituting some portions thereof is movably supported as a vibration preventing optical system. This vibration preventing optical system is shifted in such a direction as to absorb the vibration within a plane orthogonal to the optical axis of a main optical axis. As a result, the image blur is obviated.

In the above-mentioned conventional vibration preventing apparatus, however, one of the issues arising when controlling the drive of the vibration preventing optical system in accordance with a vibrating condition is a detection of a present position to which this vibration preventing optical system is shifted from the centering position, i.e., an absolute position of displacement from the centering position on the basis of the optical axis of the main optical system. The detection thereof is often required in terms of surely preventing the image blur.

Namely, the simplest way of detecting such an absolute position of displacement (hereinafter called an absolute position) of the vibration preventing optical system may be an addition of absolute position detecting means such as absolute position detecting encoders to the vibration preventing optical system or a support system thereof. Such absolute position detecting means, however, tend to be complicated in terms of assembling structure thereof. The configuration becomes intricate. Besides, the assembling part readily increases both in size and in cost. This induces a problem in terms of utilization. Those detecting means are hard to employ in the actual scene.

For this reason, the present position of the vibration preventing optical system is, it has hitherto been considered, sought based on the presumption by detecting a shift quantity from the fiducial position. However, considerations are not sufficient for a deviation caused by a backlash when carrying and storing the camera and for a break-down of the driving means for driving the vibration preventing optical system. The problems always arise when preventing the vibration by exactly knowing the position of the vibration preventing optical system.

## SUMMARY OF THE INVENTION

It is a primary object of the present invention, which has been devised under such circumstances, to provide an inexpensive and simply structured vibration preventing apparatus capable of surely preventing an image blur caused by a camera shake by adopting an as simple structure as possible and shifting a vibration preventing optical system in a predetermined state in accordance with a vibrating condition. The vibration preventing apparatus is also capable of always exactly knowing a position of the vibration preventing optical system by resetting the vibration preventing optical system invariably in a predetermined position before or after effecting a photographing exposure and by centering the same optical system before performing the photographing exposure and of thus exhibiting vibration preventive effects.

For meeting such demands, according to one aspect of the present invention, there is provided a vibration preventing apparatus comprising: a vibration preventing optical system, so supported as to be movable in directions orthogonal to the optical system of a main optical system, for preventing an image blur in accordance with a motion thereof; a driving range regulating means for regulating the motion of the vibration preventing optical system within a fixed driving range; driving means for controlling a drive of the vibration preventing optical system on the basis of a vibration detected result given by a vibration detecting

EP 0 582 843 A1

means; and a driving quantity detecting means for detecting a driving quantity of the vibration preventing optical system by the driving means, wherein the vibration preventing optical system undergoes a centering process to such a position as to coincide with the optical axis of the main optical system after being temporarily shifted by the driving means to a regulation limit position with the aid of the driving range regulating means before effecting an exposure through the main optical system.

Further, the vibration preventing apparatus is constructed such that the vibration preventing optical system is temporarily shifted and stopped by the driving means in the regulation limit position with the aid of the driving range regulating means after the exposure has been finished through the main optical system, and the vibration preventing optical system undergoes the centering process to such a position as to coincide with the optical axis of the main optical system from this regulation limit position before effecting the exposure.

Still further, according to the present invention, the vibration preventing optical system is temporarily shifted and stopped by the driving means in the regulation limit position or a position vicinal to this regulation limit position with the aid of the driving range regulating means after finishing an exposure. The vibration preventing optical system also undergoes a centering process to such a position as to coincide with the optical axis of the main optical system from this regulation limit position before effecting the exposure.

Moreover, according to the present invention, the vibration preventing optical system is temporarily shifted and stopped in the regulation limit position with the aid of the driving range regulating means just before starting the exposure through the main optical system. Thereafter, the vibration preventing optical system undergoes the centering process to such a position as to coincide with the optical axis of the main optical system. The driving quantity detecting means detects a driving quantity of the vibration preventing optical system that is given by the driving means, thus confirming a quantity of this centering process.

Furthermore, according to the present invention, the vibration preventing optical system driven by the driving means is stopped in a position in the vicinity of the regulation limit position with the aid of the driving range regulating means. Besides, the vibration preventing optical system undergoes the centering process while detected by the driving quantity detecting means up to such a position as to coincide with the optical axis of the main optical system from this regulation limit position after being temporarily shifted to the regulation limit position from the stop position before effecting the exposure through the main optical system.

Additionally, according to the present invention, the vibration preventing optical system is, after finishing the exposure through, temporarily shifted to the regulation limit position with the aid of the driving range regulating means. Thereafter, the vibration preventing optical system is shifted by a predetermined quantity away from the regulation limit position and then stopped. Besides, the vibration preventing optical system undergoes the centering process to such a position as to coincide with the optical axis of the main optical system from the regulation limit position when detected by the driving quantity detecting means after being shifted again to the regulation limit position from this stop position before effecting the exposure through the main optical system.

Furthermore, according to the present invention, the vibration preventing optical system gives an alarm indicating a break-down of the driving means if a driving state is not confirmed by the driving quantity detecting means when temporarily shifted by the driving means to the regulation limit position from the stop position.

The present invention has such a construction that the position of the vibration preventing optical system is detected by detecting the shift quantity from the regulating position set by the regulating means for regulating the driving range thereof. Hence, this vibration preventing optical system can be driven and stopped in the predetermined position and further driven in a predetermined state as the necessity arises without particularly requiring an absolute position detecting means or the like.

As explained above, the vibration preventing apparatus according to this invention comprises: the vibration preventing optical system, so supported as to be movable in the directions orthogonal to the optical axis of the main optical system, for preventing the image blur in accordance with the motion thereof; the driving range regulating means for regulating the motion thereof within the fixed driving range; the driving means for controlling the drive of this vibration preventing optical system on the basis of the vibration detected result thereof; and the means for detecting the driving quantity of the vibration preventing optical system that is given by this driving means. The vibration preventing optical system is temporarily shifted by the driving means to the regulation limit position with the aid of the driving range regulating means before effecting the exposure. Thereafter, the vibration preventing optical system undergoes the centering process to such a position as to coincide with the optical axis of the main optical system after being temporarily shifted to the regulation limit position with the aid of the driving range regulating means.

3

The structure is therefore simple. Nevertheless, an excellent effect is exhibited, wherein the vibration preventing optical system is driven in the predetermined state, and the vibration can be simply prevented in the predetermined state in a short time without using a special and highly costed absolute position detecting means.

Particularly, according to the present invention, there are provided the regulating means for mechanically regulating the driving range of the vibration preventing optical system. The vibration preventing optical system can be driven and stopped in the predetermined position (a centering position). This can be done simply by detecting the position to which the vibration preventing optical system is driven from the regulating position on the basis of a detection of the driving quantity thereof without requiring the highly costed means for detecting the absolute position of the vibration preventing optical system. Further, after the exposure, the vibration preventing optical system is reset in the predetermined regulating position or a position vicinal thereto in the driving range, whereby the vibration preventing optical system can be centered in an extremely short time just before the exposure.

Moreover, the vibration preventing optical system is reset and pre-reset separately before and after effecting the exposure. This yields advantages wherein the vibration preventing optical system can be exactly located in the predetermined centering position in a short time without using the hithly costed absolute position detecting means, and the vibration can be properly prevented.

Further, according to the present invention, the following advantage is produced. When the vibration preventing optical system is temporarily shifted by the driving means to the regulation limit position from the stop position, a driving state is confirmed by the driving quantity detecting means. If not confirmed, there is issued an alarm indicating the break-down of the driving means.

## BRIEF DESCRIPTION OF THE DRAWINGS

Other objects and advantages of the present invention will become apparent during the following discussion in conjunction with the accompanying drawings, in which:

Fig. 1 is a circuit block diagram of a photographing control circuit of a camera, showing one embodiment of a vibration preventing apparatus according to this invention;

Fig. 2 is a flowchart of assistance in explaining a control process in the vibration preventing apparatus of this invention;

Fig. 3 is a schematic diagram of assistance in explaining reset and centering processes of a vibration preventing lens in the vibration preventing apparatus of this invention;

Fig. 4 is a schematic diagram showing a modified example of Fig. 3;

Fig. 5A is a time chart of respective parts during a photographing process in a camera using the vibration preventing apparatus of this invention; Fig. 5B is a time chart of assistance in explaining the effects thereof;

Fig. 6 is a sectional view of the principal portions of a vibration preventing mechanism in a lens barrel of the camera, showing one embodiment of the vibration preventing apparatus of this invention;

Fig. 7 is a sectional view taken substantially along the line VII-VII of Fig. 6;

Fig. 8 is a sectional view taken substantially along the line VIII-VIII of Fig. 6;

Fig. 9 is an explanatory enlarged view showing the principal portion of a position detecting means for the vibration preventing lens;

Fig. 10 is an explanatory enlarged view showing the principal portion showing a method of centering the vibration preventing lens;

Fig. 11 is an explanatory schematic block diagram schematically illustrating a camera with a lens shutter that is suitable for an application of the vibration preventing apparatus of this invention; and

Fig. 12 is an explanatory schematic diagram of a vibration preventing optical system, showing how a control means of the vibration preventing apparatus shown in Fig. 1 effects the control.

## DESCRIPTION OF THE PREFERRED EMBODIMENT

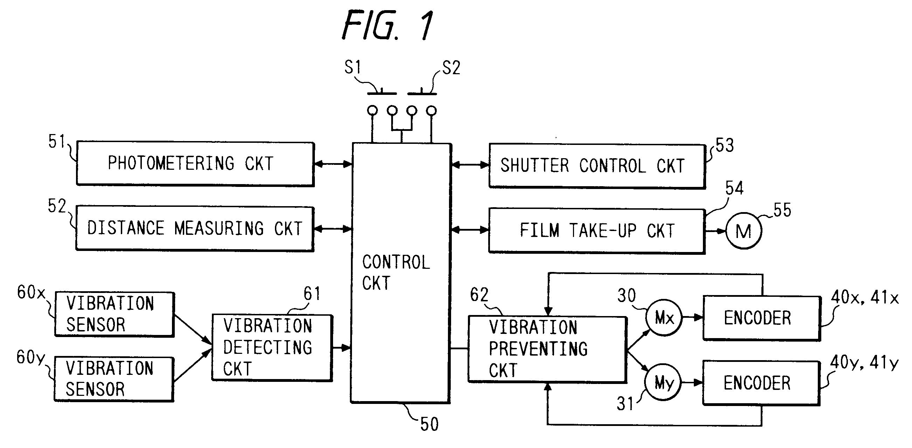

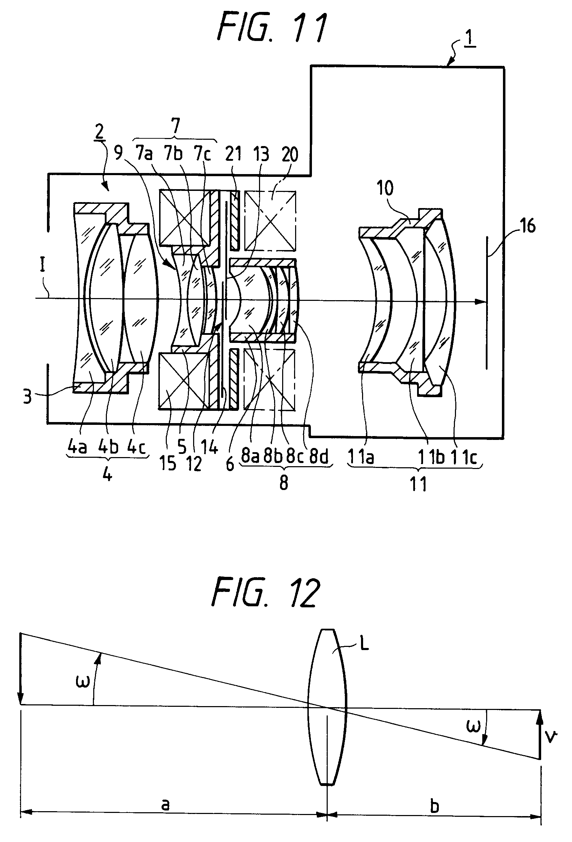

Figs. 1 through 12 in combination show one embodiment of a vibration preventing apparatus according to the present invention. Paying attention first to Fig. 11 among these Figures, there will given a brief explanation of a general configuration of a camera incorporating a photographing lens system that is suitable for an application of the present invention.

To be specific, a photographing lens system 2 in a camera generally designated at 1 is constructed of a first lens group 4, a second lens group 9 and a third lens group 11 in the form of a zoom lens. The first lens group consists of three pieces of lenses 4a, 4b, 4c held by a lens frame 3. The second lens group 9

4

consists of front and rear lens subgroups 7, 8 composed of totally seven pieces of lenses, i.e., three pieces of lenses 7a, 7b, 7c and four pieces of lenses 8a, 8b, 8c, 8d which are held by lens frames 5, 6. The third lens group 11 consists of three pieces of lenses 11a, 11b, 11c held by a lens frame 10.

A lens shutter indicated at 12 in the Figure is interposed between the front and rear lens subgroups 7 and 8 of the second lens group 9 described above. The lens shutter 12 comprises shutter curtains 13, 14 and a driving unit 15 for driving these shutter curtains. This driving unit 15 is disposed on the outer peripheral portion of the lens frame 5 for the front lens subgroup 7 in the second lens group 9. Further, the shutter curtains 13, 14 are disposed just before the rear lens subgroup 8 functioning as a vibration preventing lens which will be mentioned later.

The numeral 16 in the Figure indicates an image forming surface of a film on which a subject image is formed through the first, second and third lens groups 4, 9, 11 constituting the photographing lens system 2 described above.

Further, the numeral 1 represents an optical axis of the photographing lens system 2.

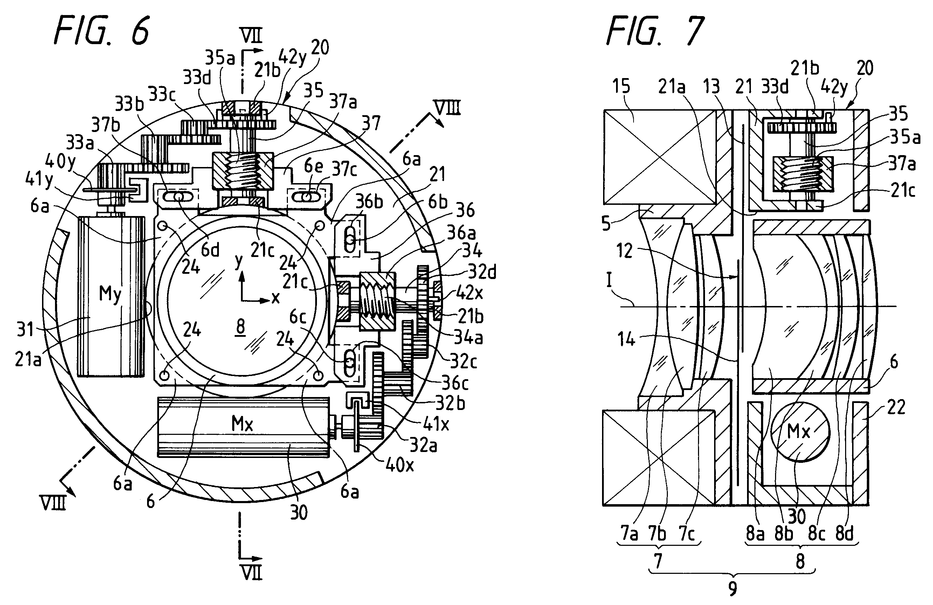

Then, in accordance with this embodiment, the second lens group 9 serving as a vibration preventing lens is shifted in directions orthogonal to the optical axis I in the photographing lens system 2 including the three lens groups 4, 9, 11 mentioned above. The image formed on the image forming surface 16 is thereby shifted according to an image blurred state. For this purpose, a vibration preventing mechanism 20 illustrated in Figs. 6 and 7 is employed. This vibration preventing mechanism 20 is, as obvious from Figs. 7, 8 and 11, provided within an air space formed along the outer periphery of the rear lens subgroup 8 of the second lens group 9, with a baseplate 21 serving as a base member on the side of the lens shutter 12.

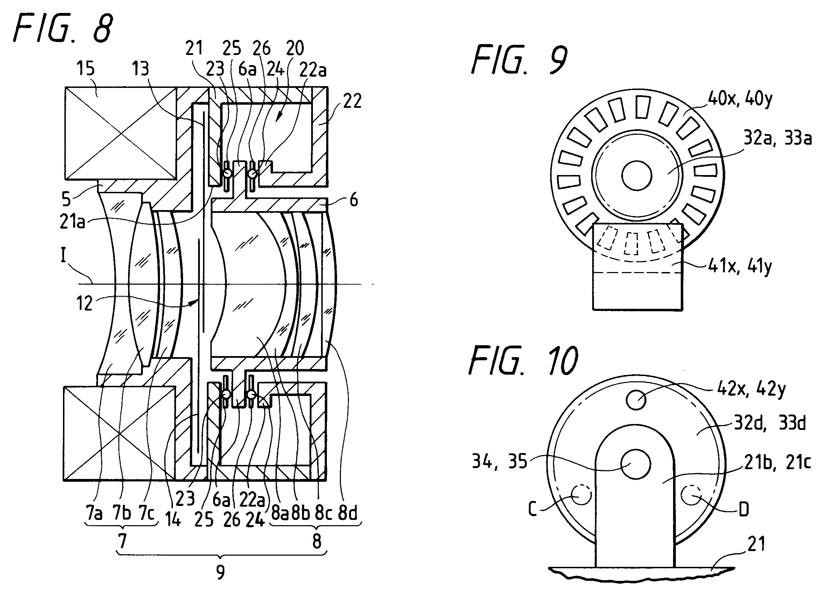

This will briefly explained with reference to Figs. 6 through 8. The rear lens subgroup 8 (hereinafter called a vibration preventing lens 8) of the second lens group 9 is fixedly held by the lens frame 6. Besides, this lens frame 6 includes flange parts 6a formed on the outer peripheral portion thereof. The flange parts 6a are sandwiched in between four pieces of presser parts 22a (only two presser parts are illustrated in Fig. 8) of a cover member 22 through four pieces of balls (steel balls) 23, 24 provided respectively in to-and-fro positions (two remaining portions are not shown), the cover member 22 being disposed at the rear end of the baseplate 21 and forming an annular air space internally in combination with the baseplate 21. The lens frame 6 is thereby so supported as to be movable with a small load in the directions orthogonal to the optical axis I inwardly of an opening 21a of the baseplate 21.

Note that only four pieces of retainers 25, 26 for retaining the respective balls 23, 24 are shown in the Figures, whereas four pieces of remaining retainers are not illustrated.

x- and y-axis DC motors (marked with Mx, My in the Figure) 30, 31 serve as driving means for shifting the vibration preventing lens 8 in the x- and y-axis directions. Gear trains 32, 33 for transmitting rotations consist of gears 32a, 32b, 32c and 33a, 33b, 33c, 33d for transmitting the driving forces given from these motors 30, 31. The rotations of the gear trains are transmitted to first and second shafts 34, 35 so axially rotatably supported on bearings 21b, 21c provided on the baseplate 21 as to extend in the x- and y-axis directions.

Incidentally, the motors 30, 31 described above are fixed on the side of the baseplate 21, while the gears 32a, 32b, 32c and 33a, 33b, 33c constituting the gear trains 32, 33 are rotatably fixed onto the baseplate 21. The final gears 32d, 33d are each constructed rotatably together with the shafts 34, 35.

x- and y-axis connecting members 36, 37 are formed with female screws 36a, 37a meshing with male screws 34a, 35a of the shafts 34, 35. The x-axis connecting member 36 is formed with slots 36a, 36c in parallel with each other in the y-axis direction. Bosses 6b, 6c provided on the flange parts 6a of the lens frame 6 engage with these slots 36b, 36c. Further, the y-axis connecting member 37 is, in the same way described above, formed with slots 37b, 37c in parallel with each other in the x-axis direction. Bosses 6d, 6e provided on the flange 6a of the lens frame 6 engage with these slots 37b, 37c.

Accordingly, the vibration preventing lens 8 is driven by the x-axis motor 30 through the connecting member 36 in the x-axis direction but is free in the y-axis direction. Besides, this vibration preventing lens 8 is driven by the y-axis motor 31 through the connecting member 37 in the y-axis direction with the same mechanism but is free in the x-axis direction.

Hence, this vibration preventing mechanism 8 is drivable in every direction inwardly of the opening 21a of the baseplate 21.

Further, detecting a position of the vibration preventing lens 8 defined as the above-mentioned vibration preventing optical system involves detecting respective rotational angles of the x- and y-axis motors 30, 31. The rotational angles thereof are detected by photo interrupters 41x, 41y provided on the side of the baseplate 21 in such a state that their peripheral edges are sandwiched in therebetween in combination with holed disks 40x, 40y provided integrally with the gears 32a, 33a shown in Figs. 6 and 9 and having a multiplicity of holes formed in the peripheral portions at equal spacings.

More specifically, the photo interrupters 41x, 41y detect the numbers of the holes of the disks 40a, 40y in the form of pulse signals. The numbers of the holes are counted, thereby detecting the position thereof. This serves as a driving quantity detecting means for detecting a driving quantity of the vibration preventing lens 8.

Further, positioning of the vibration preventing lens 8 is conducted in the following manner.

That is, in accordance with this embodiment, a driving range regulating means for regulating a motion of the vibration preventing lens 8 within a fixed range acts as follows. As obvious from Figs. 6 and 10, stopper pins 42x, 42y are provided in eccentric positions of the gears 32d, 33d formed integrally on the shafts 34, 35. These stopper pins 42x, 42y are each made to impinge on both side edges of the bearings 21b, 21b of the baseplate 21 in positions C, D shown in Fig. 10. The rotational angles of the gears 32d, 33d can be thereby regulated within the rotational range between the positions C and D.

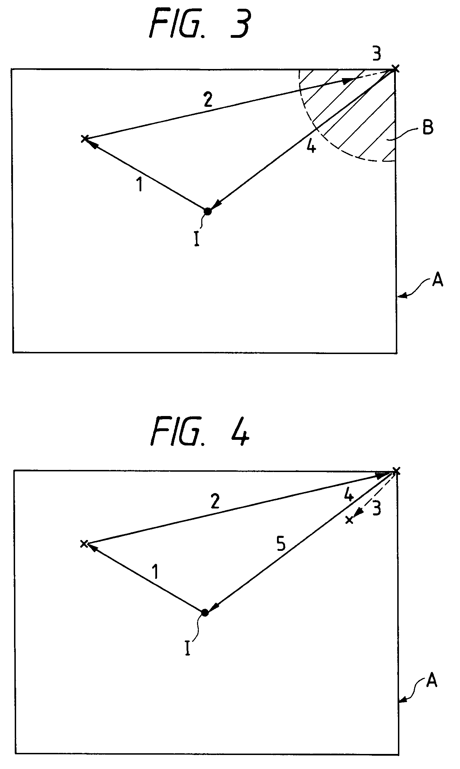

Based on this construction, a shift driving range for preventing the vibration by the vibration preventing lens 8 is, as illustrated in, e.g., Fig. 3 or 4, set to assume a substantially rectangular shape in which the lens is movable within the fixed range in the x- and y-axis directions, respectively. Besides, the lens drive can be mechanically regulated at the side edges thereof.

Then, positioning of this vibration preventing lens 8 within the range can be conducted by detecting the shift quantity (driving quantity) of the vibration preventing lens 8 from the regulated position in a driving range A described above. Herein, this vibration preventing lens 8 may be centered by making the central position (corresponding to the optical axis I of the principal optical system in the photographing lens system 2) of this regulating range coincident with the central position of the vibration preventing lens 8.

Then, according to the vibration preventing mechanism 20 stated above, the rear lens subgroup (vibration preventing lens) 8 of the second lens group 9 shown in Fig. 11 is shifted within the driving range A in the directions orthogonal to the lens optical axis I. The image formed on the image forming surface 16 is thereby shifted in a predetermined state. As a result, the image blur can be prevented.

Fig. 1 is also a block diagram illustrating a photographing circuit of the camera including a control circuit for controlling the foregoing vibration preventing mechanism 20. Referring to the same Figure, a CPU-based control circuit 50 constitutes a photographing control circuit of the camera. This control circuit 50 is constructed to receive transmissions of signals from a known photometering circuit 51 and distance measuring circuit 52.

A shutter control circuit 53 and a film take-up circuit 54 for rotationally driving a film take-up motor 55 are controlled by signals transmitted from the control circuit 50.

Connected also to the control circuit 50 are a half-depression switch S1 turned ON by half-depressing an unillustrated release button and a full-depression switch S2 turned ON by fully depressing the release button. The respective circuits explained above are properly controlled by these switches S1, S2.

Further, known angular speed sensors 60 indicated at 60x, 60y in the Figure each detect angular speeds both in the up-and-down directions and in the right-and-left directions of the camera. A vibration detecting circuit 61 converts outputs of the angular speed sensors 60x, 60y into speeds at which the image on the image forming surface moves. A vibration preventing circuit 62 controls driving of the motors 30, 31 for driving the vibration preventing lens 8 on receiving vibration information from the control circuit 50 which has received the signal from the vibration detecting circuit 61.

Subsequently, this vibration preventing circuit 62 causes the sensors 60x, 60y to detect angular speeds $\omega x$, $\omega y$ in the up-and-down/right-and-left directions of the camera. Consequently, the vibration detecting circuit 61 converts the outputs thereof into the speeds at which the image on the image forming surface moves. Driving of the motors 30, 31 is controlled by the vibration preventing circuit 62 in combination with the control circuit 50. The image blur is thus prevented.

Processing of the conversion by this vibration detecting circuit 61 will be herein explained with reference to Fig. 12.

Namely, an angular speed at which the camera is inclined is given as follows. An image forming formula is expressed such as:

$$\frac{1}{a} + \frac{1}{b} = \frac{1}{f} \qquad \ldots (1)$$

where a is the distance from a lens L to a subject, b is the distance to the image forming surface, and f is the focal length of the lens L. From this relationship, when the optical axis I is inclined up to I' at an angular speed ω, a speed v at which the image on the image forming surface moves can be, with the arrowed direction being set forward, expressed as follows:

$$v = \frac{af}{a-f}\; \omega \qquad\qquad (2)$$

Hence, in the up-and-down directions of the camera, the speed is given by:

$$v_x = \frac{af}{a-f}\; \omega_x \qquad\qquad \ldots (3)$$

In the right-and-left directions of the camera, the speed is given by:

$$v_y = \frac{af}{a-f}\; \omega_y \qquad\qquad \ldots (4)$$

Next, the vibration preventing circuit 62 controls the DC motors 30, 31 to drive the vibration preventing lens 8 in order to cancel the image speeds $v_x$, $v_y$, respectively.

Then, the rotational angles and rotating speeds of the DC motors 30, 31 at that time are detected by an x-axis encoder (consisting of the disk 40x and the photo interrupter 41x) and a y-axis encoder (consisting of the disk 40y and the photo interrupter 41y). The rotational angles and the rotating speeds thereof are fed back to the driving circuit 62, thereby effecting the predetermined driving control.

Now, according to the present invention, as apparent from the construction discussed above, the vibration preventing apparatus comprises the vibration preventing lens 8, the stopper pins 42x, 42y, the motors 30, 31 and the encoders 40x, 41x; 40y, 41y. The vibration preventing lens 8 is so supported as to be movable in the directions orthogonal to the optical axis I in the photographing lens system 2. The vibration preventing lens 8 also constitutes the vibration preventing optical system for preventing the image blur. The stopper pins 42x, 42y serves as the driving range regulating means for regulating the motion of this vibration preventing lens 8 within the fixed driving range. The motors 30, 31 serve as the driving means for controlling the drive of this vibration preventing lens 8 on the basis of a result of the vibration detected by the vibration sensors 60x, 60y defined as the vibration detecting means. The encoders 40x, 41x; 40y, 41y serve as the driving quantity detecting means for detecting the driving quantity of the vibration preventing lens 8 driven by these motors 30, 31. In the thus constructed vibration preventing apparatus, the vibration preventing lens 8 is, as obvious from Fig. 3 or 4, temporarily shifted by the motors 30, 31 to the regulation limit positions with the aid of the driving range regulating means (42x, 42y) before performing an exposure through the photographing lens system 2. Thereafter, the vibration preventing lens 8 undergoes centering to such a position as to coincide with the optical axis I of the photographing lens system 2. This is a characteristic in terms of construction.

Namely, according to the present invention, in the vibration preventing mechanism 20 described above, it is possible to simply surely confirm the present position of the vibration preventing lens 8, driven within the fixed driving range A on the basis of the result of detections by the vibration sensors 60x, 60y, for preventing the image blur without using the absolute position detecting means.

This will be described in greater detail. According to the present invention, the vibration preventing lens 8 stated above is so constructed as to be movable by a predetermined quantity in the x- and y-axis directions within the driving range A. The driving quantity thereof is measured based on hole-counting, thus confirming the present position thereof. In view of this, the vibration preventing lens 8 is driven in any one of the x- and y-axis directions during a period from the completion of photographing to next photographing. The motion thereof is regulated by the stopper pins 42x, 42y serving as the driving range regulating means, thereby locating the vibration preventing lens 8 in an initial reset position. At the same time, a shift quantity from this initial reset position is measured based on hole-counting by the encoders 40x, 41x; 40y, 41y serving as the driving quantity detecting means. During this counting process, the vibration preventing lens 8 is driven to the central position (the optical axis I of the principal optical system) of the driving range A,

7

thereby effecting the centering process.

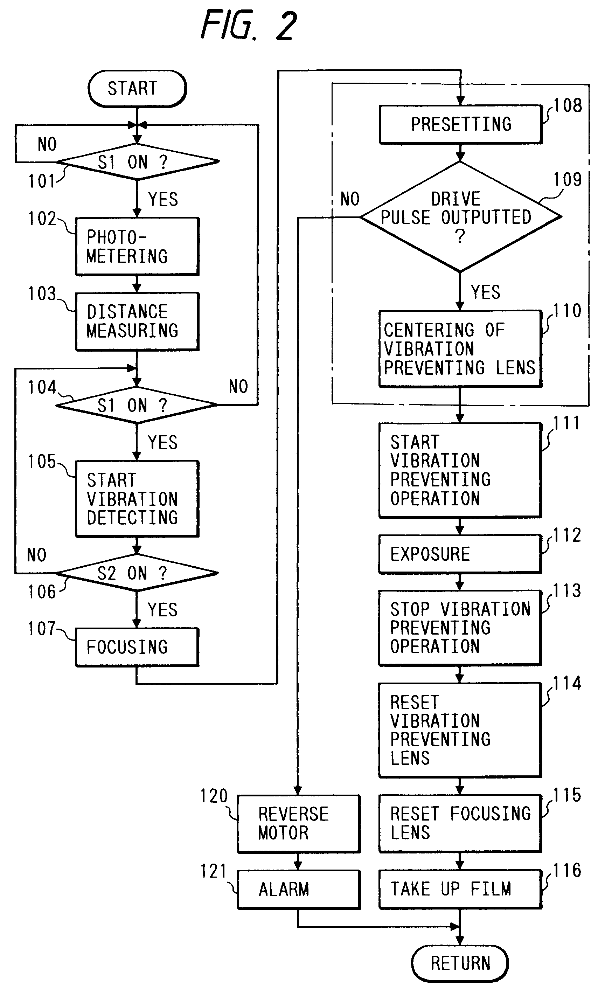

The vibration preventing lens 8 may be reset and centered as shown in Figs. 2, 3 and 4.

That is, the vibration preventing lens 8 is, it can be considered, reset in the following three cases:

(1) when the vibration preventing lens 8 is shifted in one of the x- and y-axis directions within the driving range A, forcibly mechanically locked by the stopper pins 42x, 42y and stopped at one angular portion;

(2) when the vibration preventing lens 8 is shifted in one of the x- and y-axis directions within the driving range A, forcibly mechanically locked by the stoppers 42x, 42y, stopped at one angular portion and thereafter, as shown by the numeral 3 in Fig. 4, driven to return a bit inwardly of the driving range A; and

(3) when the vibration preventing lens 8 driven by a half of the shift quantity both in the x-axis direction an in the y-axis direction within the driving range A and, as obvious from Fig. 3, located at a portion closer to one angular portion of the driving range A (e.g., within the range indicated by B in Fig. 3).

Then, if any of the three ways of resetting is adopted, the problem is small in terms of practicality.

In the resetting process (1), however, after the end of photographing of the camera, the vibration preventing lens 8 is reset at the angular portion of the driving range A. This location is kept in the reset state. However, the photographing operation is stopped in this state. When carried and stored after turning OFF the power supply, as a matter of fact, it is impossible to completely prevent the motion of the vibration preventing lens 8. For instance, when the vibration is prevented by the vibration preventing lens 8 by turning ON the power supply once again, a reliability as to whether the vibration preventing lens 8 is in the above-described reset position or not is poor.

Then, prevention of such a problem may involve the following steps. As explained in the case (2) or (3), there is performed such presetting that the vibration preventing lens 8 is located in a position deviating slightly from the angular portion of the driving range A; and during the photographing process, the vibration preventing lens 8 is returned to the regulating position before the exposure. Even when the vibration preventing lens 8 is not in the regulating position of the driving range A, the vibration preventing lens 8 may be shifted to the centering position, i.e., the initial position on the occasion of preventing the vibration. This will easily be understood because of a problem of backlash in the driving system in addition to the above-mentioned impact.

Further, as explained in the case (2) or (3), when the vibration preventing lens 8 is temporarily shifted to the regulating position of the driving range A, it is possible to judge whether the motors 30, 31 serving as the driving means are normally driven or not. An advantage thereof is remarkable.

Given herein is a brief explanation of the operation when preventing the vibration by use of the vibration preventing apparatus according to this invention with reference to a flowchart of Fig. 2. To be specific, the operation starts with turning ON an unillustrated main switch. The switch S1 is turned ON by half-depressing the release switch (not shown) (step 101). A vibration preventing step starts. Then, photometering and distance measuring processes are carried out by turning ON this switch S1 (steps 102, 103).

In this state, when the ON-state of the switch S1 is confirmed in step 104, the vibration is detected by the vibration sensors 60x, 60y in step 105.

Subsequently, the release switch is fully depressed in step 106 to turn ON the switch S2, thus effecting focusing (step 107). Centering of the vibration preventing lens 8 characterizing the present invention is conducted as apparently shown in step 110.

Centering of this vibration preventing lens 8 herein involves the three ways described above. In the method (1), the vibration preventing lens 8 is positioned at the angular portion of the driving range A and may be therefore driven directly to the center in the x- and y-axis directions in the driving range A. At this time, the driving quantity of the vibration preventing lens 8 is measured based on hole-counting by the encoders 40x, 41x; 40y, 41y. Driving thereof may be stopped in a predetermined position.

Based on the above-mentioned method (2) or (3), however, the vibration preventing lens 8 is not in the regulation limit position in the driving range A and is therefore temporarily moved back to the regulation limit position (preset in step 108). Subsequently, centering thereof in step 110 may be performed.

In such a case, herein, the motion of the vibration preventing lens 8 is monitored by the encoders 40x, 41x; 40y, 41y. As shown in step 109, whether or not the driving pulses are transmitted may be judged. This is intended to detect whether the motors 30, 31 are normally driven or not. It is preferable that the reliability be checked in terms of the operation of the vibration preventing apparatus by performing the step 109 described above.

Incidentally, if the driving pulses are not transmitted, this implies a break-down of the driving system of the vibration preventing lens 8 or breakdowns of the motors 30, 31 themselves. In this instance, as shown in step 120, the motors 30, 31 are temporarily rotated reversely. Whether the lens 8 is driven or not is checked. Thereafter, an alarm display or an alarm sound is given in step 121. Subsequently, this photographing operation is ended, or alternatively the vibration preventing operation is canceled. Photographing with no execution to prevent the vibrations may be effected.

Further, the operations from step 108 to step 110 may be arranged as a centering operation of the vibration preventing lens 8.

In short, the vibration preventing lens 8 may be, though more or less different depending on any of the three methods described above, centered in the driving range A.

After being centered as described above, on the basis of the vibration detected results by the vibration sensors 60x, 60y, the motors 30, 31 are driven by the vibration preventing circuit 62 in combination with the control circuit 50 in accordance with the vibration information transmitted from the vibration detecting circuit 61. It follows that the vibration preventing lens 8 starts preventing the vibrations (step 111).

Then, the exposure is conducted as it is in step 112. The vibration preventing process is stopped in step 113. Thereafter, as shown in step 114, the vibration preventing lens 8 is reset as one of the above-mentioned three ways.

Further, as shown in steps 115 and 116, focusing is reset. The film is also taken up, and the operation is returned, thus completing a series of photographing processes.

Herein, Figs. 3 and 4 show the above-mentioned vibration preventing process from the centering position, the resetting process, the pre-resetting process and the centering process of the vibration preventing lens 8. Incidentally, it will be easily understood that Fig. 3 corresponds to the method (2). Fig. 4 corresponds to the method (4). The numerals in the Figures indicate a sequence of movements from the centering position (the optical axis I).

Further, the order based on the method (1) is, though not illustrated, substantially the same as that in Fig. 3 except that the reset position is different.

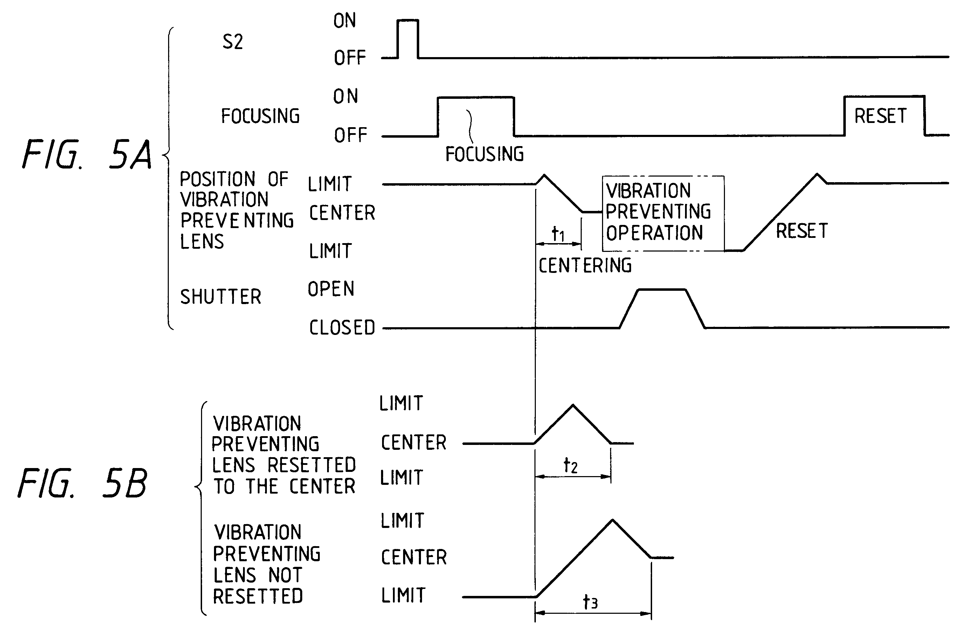

Figs. 5A and 5B are time charts of assistance in explaining a sequence from a turn-ON of the switch S2 by the full-depression of the release button to the focusing/resetting processes. The particulars thereof will be easily understood.

Explaining this briefly, as obvious from Fig. 5A, the switch S2 is turned ON by fully depressing the release button. Focusing is thereby performed, and the vibration preventing lens 8 is centered. At this moment, the vibration preventing lens 8 is driven to a regulating position from a regulating position closer to one side of the driving range A or a reset position in the vicinity this regulating position. The vibration preventing lens 8 is further driven from this regulating position to the central position, thus centering the vibration preventing lens 8.

Let t1 be the time required for this centering process. Next, the vibration preventing process is started. The shutter is opened and closed for an exposure. The prevention of vibrations is stopped. Thereafter, the vibration preventing lens 8 is reset.

Herein, when the vibration preventing lens 8 stops preventing the vibrations, and even if located in the regulating position, e.g., on the other side, the vibration preventing lens 8 is always driven to the predetermined regulating position on one side in the driving range A during the resetting process. The vibration preventing lens 8 is further driven to the reset position, i.e., that position or a position slightly shifted back therefrom. After this process, focusing is reset.

Next, referring to Fig. 5B, a consideration is given to a case where a reset process different from the above-mentioned is effected. That is, the vibration preventing lens 8 is returned to, e.g., the central position during the reset process. In this case, exact centering is not attainable unless the vibration preventing lens 8 is driven once to any one of the regulating positions and further driven to the central position therefrom during the centering process. Then, at this time, as apparent from Fig. 5B, the centering process requires the time t2 that is substantially twice the time shown in Fig. 5A.

Moreover, if resetting is not done, it is required that the vibration preventing lens 8 be driven from the regulating position on the other side to the regulating position on one side and further driven to the central position in the worst case. This takes the time t3 longer than the above-mentioned. Consequently, the processes from the turn-ON of the switch S2 by the full-depression of the release button to the exposure are time-consuming. The sequence comes to have a large time lag from the release to the exposure. The advantage of the present invention will be therefore apparent.

Then, according to the construction given above, there is provided the regulating means for mechanically regulating the driving range A for the vibration preventing lens 8. From the regulating position thereof, the vibration preventing lens 8 can be driven and stopped in the predetermined position (centering position) simply by detecting the driving quantity without requiring the highly costed means for detecting the absolute position of the vibration preventing lens 8. Besides, the following advantage is exhibited. After the exposure, the vibration preventing lens 8 is reset in the predetermined regulating position or a position vicinal thereto in the driving range A. The vibration preventing lens 8 can be thereby centered in an extremely short time just before the exposure.

Particularly, the above-described resetting and pre-resetting processes are conducted, whereby the pre-resetting processes are conducted, whereby the vibration preventing lens 8 is located exactly in the predetermined centering position in a short period of time without employing the highly-costed absolute position detecting means. The vibrations can be properly prevented. The advantage thereof is large in terms of the practicability.

Note that the present invention is not limited to the structure of the embodiment discussed above. As a matter of course, it is possible to adequately modify and change the configurations and structures of the respective units initially from the image vibration preventing mechanism 20 that constitute the vibration preventing apparatus.

In short, there may be properly adopted the known vibration preventing mechanism capable of causing the vibration preventing lens 8 to prevent the vibrations in the x- and y-axis directions.

Further, the embodiment discussed above has dealt with the case where the present invention is applied to the camera including the lens shutter 12. This invention is not, however, limited to this application but may be applied to vibration preventing lenses shifted in the directions orthogonal to the optical axis I in order to prevent the image blur caused by the camera shake or the like in the conventionally known cameras. The invention is not, as a matter of course, conditioned by structures of the cameras.

Moreover, the vibration preventing apparatus according to this invention is not confined to the camera described above but is of course capable of exhibiting the advantages when applied to a variety of optical instruments and equipment. In short, the application thereof is effective on condition that the vibration preventing apparatus is of such a type as to incorporate the vibration preventing optical system in a movable state but employ no absolute position detecting means capable of detecting the absolute position thereof.

It is apparent that, in this invention, a wide range of different working modes can be formed based on the invention without deviating from the spirit and scope of the invention. This invention is not restricted by its specific working modes except being limited by the appended claims.

**Claims**

1. A vibration preventing apparatus comprising:

   a vibration preventing optical system, so supported as to be movable in directions orthogonal to the optical system of a main optical system, for preventing an image blur in accordance with a motion thereof;

   a driving range regulating means for regulating the motion of said vibration preventing optical system within a fixed driving range;

   a driving means for controlling a drive of said vibration preventing optical system on the basis of a vibration detected result given by a vibration detecting means; and

   a driving quantity detecting means for detecting a driving quantity of said vibration preventing optical system by said driving means, wherein said vibration preventing optical system undergoes a centering process to such a position as to coincide with the optical axis of said main optical system after being temporarily shifted by said driving means to a regulation limit position with the aid of said driving range regulating means before effecting an exposure through said main optical system.

2. The vibration preventing apparatus according to claim 1, wherein said vibration preventing optical system is temporarily shifted and stopped by said driving means in the regulation limit position with the aid of said driving range regulating means after the exposure has been finished through said main optical system, and said vibration preventing optical system undergoes the centering process to such a position as to coincide with the optical axis of said main optical system from this regulation limit position before effecting the exposure.

3. The vibration preventing apparatus according to claim 2, wherein said vibration preventing optical system driven by said driving means is stopped in the regulation limit position with the aid of said driving range regulating means.

4. The vibration preventing apparatus according to claim 3, wherein said vibration preventing optical system undergoes the centering process to such a position as to coincide with the optical axis of said main optical system after being temporarily shifted and stopped by said driving means in the regulating limit position with the aid of said driving range regulating means just before starting the exposure through said main optical system.

10

**5.** The vibration preventing apparatus according to claim 1, wherein said vibration preventing optical system is shifted by said driving means to such a position as to coincide with the optical axis of said main optical system when said driving quantity detecting means detects a driving quantity from the regulation limit position with the aid of said driving range regulating means.

**6.** The vibration preventing apparatus according to claim 2, wherein said vibration preventing optical system driven by said driving means is stopped in a position in the vicinity of the regulation limit position with the aid of said driving range regulating means.

**7.** The vibration preventing apparatus according to claim 6, wherein said vibration preventing optical system is temporarily shifted and stopped by said driving means in a position in the vicinity of the regulation limit position with the aid of said driving range regulating means after finishing the exposure through said main optical system, and said vibration preventing optical system undergoes the centering process to such a position as to coincide with the optical axis of said main optical system from the regulation limit position after being temporarily shifted to the regulation limit position from this stop position before effecting the exposure through said main optical system.

**8.** The vibration preventing apparatus according to claim 7, wherein said vibration preventing optical system is shifted by said driving means to such a position as to coincide with the optical axis of said main optical system when said driving quantity detecting means detects the driving quantity from the regulation limit position with the aid of said driving range regulating means.

**9.** The vibration preventing apparatus according to claim 2, wherein said vibration preventing optical system driven by said driving means is shifted by a predetermined quantity away from the regulation limit position and stopped after being temporarily shifted to the regulation limit position with the aid of said driving range regulating means.

**10.** The vibration preventing apparatus according to claim 9, wherein said vibration preventing optical system is, after finishing the exposure through said main optical system, temporarily shifted to the regulation limit position with the aid of said driving range regulating means, further shifted by the predetermined quantity away therefrom and stopped, and said vibration preventing optical system undergoes the centering process to such a position as to coincide with the optical axis of said main optical system from the regulation limit position after being shifted again to the regulation limit position from this stop position before effecting the exposure through said main optical system.

**11.** The vibration preventing apparatus according to claim 10, the vibration preventing optical system is shifted by said driving means to such a position as to coincide with the optical axis of said main optical system when said driving quantity detecting means detects the driving quantity from the regulation limit position with the aid of said driving range regulating means.

**12.** The vibration preventing apparatus according to claim 9, wherein said vibration preventing optical system gives an alarm indicating a break-down of said driving means if a driving state is not confirmed by said driving quantity detecting means when temporarily shifted by said driving means to the regulation limit position from the stop position.

**13.** The vibration preventing apparatus according to claim 10, wherein said vibration preventing optical system gives an alarm indicating a break-down of said driving means if a driving state is not confirmed by said driving quantity detecting means when temporarily shifted by said driving means to the regulation limit position from the stop position.

**14.** The vibration preventing apparatus according to claim 11, wherein said vibration preventing optical system gives an alarm indicating a break-down of said driving means if a driving state is not confirmed by said driving quantity detecting means when temporarily shifted by said driving means to the regulation limit position from the stop position.

**15.** The vibration preventing apparatus according to claim 2, wherein said vibration preventing optical system is shifted by said driving means to such a position as to coincide with the optical axis of said main optical system when said driving quantity detecting means detects a driving quantity from the regulation limit position with the aid of said driving range regulating means.

16. The vibration preventing apparatus according to claim 4, wherein said vibration preventing optical system is shifted by said driving means to such a position as to coincide with the optical axis of said main optical system when said driving quantity detecting means detects a driving quantity from the regulation limit position with the aid of said driving range regulating means.

EP 0 582 843 A1

# FIG. 1

S1    S2

| 51 PHOTOMETERING CKT | | 53 SHUTTER CONTROL CKT |

| 52 DISTANCE MEASURING CKT | | 54 FILM TAKE-UP CKT | 55 M |

CONTROL CKT

60x VIBRATION SENSOR

60y VIBRATION SENSOR

61 VIBRATION DETECTING CKT

62 VIBRATION PREVENTING CKT

30 Mx    ENCODER 40x, 41x

31 My    ENCODER 40y, 41y

50

# FIG. 2

```
                    START

         NO    ┌──────────────┐              ┌──────────────────┐ 108
    ┌──────────│   S1 ON ?    │              │   PRESETTING     │
    │          └──────────────┘              └──────────────────┘
    │    101        │ YES                              │
    │          ┌──────────────┐                        │
    │    102   │  PHOTO-      │         NO    ┌──────────────────┐ 109
    │          │  METERING    │     ┌─────────│  DRIVE           │
    │          └──────────────┘     │         │  PULSE OUTPUTTED │
    │               │               │         │       ?          │
    │          ┌──────────────┐     │         └──────────────────┘
    │    103   │  DISTANCE    │     │                  │ YES
    │          │  MEASURING   │     │         ┌──────────────────┐ 110
    │          └──────────────┘     │         │  CENTERING OF    │
    │               │          NO   │         │  VIBRATION       │
    │    104   ┌──────────────┐     │         │  PREVENTING LENS │
    │      ┌───│   S1 ON ?    │     │         └──────────────────┘
    │      │   └──────────────┘     │                  │
    │      │        │ YES           │         ┌──────────────────┐ 111
    │      │   ┌──────────────┐     │         │  START           │
    │      │105│  START       │     │         │  VIBRATION       │
    │      │   │  VIBRATION   │     │         │  PREVENTING      │
    │      │   │  DETECTING   │     │         │  OPERATION       │
    │      │   └──────────────┘     │         └──────────────────┘
    │  NO  │        │               │                  │
    │      │   ┌──────────────┐     │         ┌──────────────────┐ 112
    │      └───│   S2 ON ?    │     │         │  EXPOSURE        │
    │    106   └──────────────┘     │         └──────────────────┘
    │               │ YES           │                  │
    │    107   ┌──────────────┐     │         ┌──────────────────┐ 113
    │          │  FOCUSING    │     │         │  STOP VIBRATION  │
    │          └──────────────┘     │         │  PREVENTING      │
    │               │               │         │  OPERATION       │
    └───────────────┘               │         └──────────────────┘
                                    │                  │
                                    │         ┌──────────────────┐ 114
                                    │         │  RESET           │
                                    │         │  VIBRATION       │
                                    │         │  PREVENTING      │
                                    │         │  LENS            │
                                    │         └──────────────────┘
                                    │                  │
         120 ┌──────────────┐       │         ┌──────────────────┐ 115
             │  REVERSE     │───────┘         │  RESET FOCUSING  │
             │  MOTOR       │                 │  LENS            │
             └──────────────┘                 └──────────────────┘
                 │                                    │
         121 ┌──────────────┐                 ┌──────────────────┐ 116
             │  ALARM       │                 │  TAKE UP FILM    │
             └──────────────┘                 └──────────────────┘
                 │                                    │
                 └────────────────────────────────────┤
                                                       │
                                                  RETURN
```

FIG. 3

FIG. 4

FIG. 5A

FIG. 5B

EP 0 582 843 A1

FIG. 7

FIG. 6

FIG. 8

FIG. 9

FIG. 10

EP 0 582 843 A1

## FIG. 11

## FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 970 540 (VASEY ET AL) <br> * the whole document * | 1,2 | G02B27/64 |
| A | PATENT ABSTRACTS OF JAPAN <br> vol. 14, no. 415 (P-1102)7 September 1990 <br> & JP-A-02 160 214 (CANON) 20 June 1990 <br> * abstract; figures * | 1,2 | |
| A | PATENT ABSTRACTS OF JAPAN <br> vol. 16, no. 323 (P-1386)15 July 1992 <br> & JP-A-04 095 933 (CANON) 27 March 1992 <br> * abstract; figure * | 1 | |
| A | PATENT ABSTRACTS OF JAPAN <br> vol. 15, no. 115 (P-1181)19 March 1991 <br> & JP-A-03 005 738 (CANON) 11 January 1991 <br> * abstract; figures * | 1 | |

TECHNICAL FIELDS
SEARCHED      (Int.Cl.5)

G02B

The present search report has been drawn up for all claims

| Place of search | Date of completion of the search | Examiner |
|---|---|---|
| THE HAGUE | 3 November 1993 | WARD, S |

EPO FORM 1503 03.82 (P04C01)